# EUROPÄISCHE PATENTSCHRIFT

(11) **EP 2 433 242 B1**
(45) Veröffentlichungstag und Bekanntmachung des Hinweises auf die Patenterteilung: **11.09.2019**
(21) Anmeldenummer: 10721333.2
(22) Anmeldetag: 19.05.2010
(51) Int. Cl.: G06F 21/73, H04L 9/06, G06F 7/58

(54) **VERWENDUNG EINER ZEICHENKETTE IN SYSTEMEN DER KRYPTOGRAPHIE, DER STATISTIK, DER SIMULATION, DER RANDOMISIERUNG, VON SPIELAUTOMATEN UND DGL.**
USE OF A STRING OF CHARACTERS IN SYSTEMS OF CRYPTOGRAPHY, STATISTICS, SIMULATION, RANDOMIZATION, GAMING MACHINES AND THE LIKE
UTILISATION D'UNE CHAÎNE DE CARACTÈRES DANS DES SYSTÈMES DE CRYPTOGRAPHIE, STATISTIQUES, SIMULATION, RANDOMISATION, DE MACHINES À SOUS ET SIMILAIRES

(30) Priorität: 20.05.2009 DE 102009022233
(43) Veröffentlichungstag der Anmeldung: 28.03.2012
(73) Patentinhaber: Jentzsch, Rolf, 04159 Leipzig (DE); Feustel, Dietmar, 04451 Panitzsch (DE); Topf, Birgit, 04435 Schkeuditz (DE)
(72) Erfinder: JENTZSCH, Rolf, 04159 Leipzig (DE)
(74) Vertreter: Hecht, Jan-David
(86) Internationale Anmeldenummer: PCT/EP2010/003089
(87) Internationale Veröffentlichungsnummer: WO 2010/133360

(56) Entgegenhaltungen:
- EP-A1- 1 465 427
- EP-A2- 1 223 705
- WO-A1-97/20266
- US-A1- 2009 097 661
- JOHN KELSEY ET AL: "Secure Applications of Low-Entropy Keys" INTERNET CITATION 31. Dezember 1998 (1998-12-31), Seiten 1-14, XP007914717 Gefunden im Internet: URL:http://www.schneier.com/paper-low-entr opy.pdf [gefunden am 2010-09-06]
- ACM, 2 PENN PLAZA, SUITE 701 - NEW YORK USA, 31. Dezember 2007 (2007-12-31), XP040018583
- ACM, 2 PENN PLAZA, SUITE 701 - NEW YORK USA, 31. Dezember 2005 (2005-12-31), XP040060264
- BRUCE SCHNEIER ED - SCHNEIER B: "Applied Cryptography, One-Time Pads" 1. Januar 1996 (1996-01-01), APPLIED CRYPTOGRAPHY, PROTOCOLS, ALGORITHMS, AND SOURCE CODE IN C, JOHN WILEY & SONS, INC, NEW YORK, PAGE(S) 15 - 17 , XP002495601 ISBN: 978-0-471-11709-4 das ganze Dokument
- JENTZSCH R: "Erklärung zum Ende des Wettbewerbes" INTERNET CITATION 4. Januar 2006 (2006-01-04), Seiten 1-9, XP007914714 Gefunden im Internet: URL:http://web.archive.org/web/20070727071 723/www.krypto-sida.de/test.htm [gefunden am 2010-09-06]

## Beschreibung

Die vorliegende Erfindung betrifft ein Verfahren zur Verwendung einer Zeichenkette in Systemen der Kryptographie, der Statistik, der Simulation, der Randomisierung, von Spielautomaten und dgl., eine Einrichtung in Systemen der Kryptographie, der Statistik, der Simulation, der Randomisierung, von Spielautomaten und dgl. und ein entsprechendes Computerprogrammprodukt.

In zahlreichen Systemen der Kryptographie, der Statistik, der Simulation, der Randomisierung, von Spielautomaten und dgl. werden Zeichenketten als Startgrößen eingesetzt. Beispielsweise verwendet man solche Zeichenketten als Schlüssel in der Kryptographie. Solche Schlüssel sind Zeichenketten, die im Falle von Computeranwendungen häufig im Binärsystem dargestellt sind. Um eine sichere Verschlüsselung zu ermöglichen, sind diese Schlüssel zu dem häufig zufällig aufgebaut und bestehen im einfachsten Fall aus Zufallszahlen. Im Fall einer binären Darstellung des Schlüssels sind dann die binären Elemente in den Schlüssel zufällig angeordnet.

Bekannt ist beispielsweise das informationstheoretisch sichere One-Time-Pad-Verfahren, bei dem ein zufälliger Schlüssel, der mindestens die gleiche Länge wie die zu verschlüsselnde Nachricht aufweist, verwendet wird, um die Nachricht zu verschlüsseln. Absender und Empfänger müssen hier den Schlüssel vorher untereinander ausgetauscht haben und dabei sicherstellen, dass der Schlüssel nicht in fremde Hände gelangen kann. Außerdem darf der Schlüssel in diesem Verfahren nur einmal verwendet werden, um die Sicherheit zu gewährleisten.

Nachteilig an diesem sicheren Verfahren ist, dass der Schlüssel immer nur einmal verwendbar ist und daher vor jedem Nachrichtenaustausch ein Austausch eines solchen Schlüssels stattgefunden haben muss, der zu dem noch mindestens die Länge des Nachrichtentextes aufweisen muss. Zwar kann man auch Schlüssel auf Vorrat miteinander vereinbaren, allerdings geht auch dieser Vorrat je nach Intensität der Kommunikation zu Ende. Sollen neue Schlüssel vereinbart werden, müssen die Teilnehmer wieder zusammenkommen. Damit ist das Verfahren zwar sicher, aber andererseits sehr aufwendig und unflexibel.

Andererseits ist es aber auch bekannt, Verschlüsselungsverfahren zu verwenden, wobei der Nutzer einen Schlüssel erhält, der über einen gewissen Zeitraum nicht verändert wird. Dieser Schlüssel ist zumeist kürzer als einer, der im One-Time-Pad Verwendung findet. Nachteilig an diesem Verfahren ist es jedoch, dass mit Hilfe geeigneter Technik und Algorithmen aus der verschlüsselten Nachricht selbst Rückschlüsse auf den Schlüssel gezogen werden können. Die Kommunikation ist also unsicherer als beim One-Time-Pad-Verfahren.

Da aus diesem Grunde also zu befürchten steht, dass auf solche in diesen Systemen verwendete Zeichenketten Rückschlüsse gezogen werden können und daher die Systeme angreifbar sind, müssen diese Zeichenketten in regelmäßigen Abständen erneuert werden. Damit sind aber ähnliche Nachteile verbunden wie beim One-Time-Pad-Verfahren, womit ein hoher Wartungsaufwand und damit verbunden hohe Kosten einhergehen.

Ähnliche Probleme treten auch bei den anderen oben genannten Systemen auf. Beispielsweise verwenden Spielautomaten eine intern vorgegebene Zufallszahl, um daraus den Verlauf von Spielen zu entwickeln. Solche Spielautomaten, die häufig als Glücksspielautomaten Verwendung finden, sind dabei ein besonders lukratives Ziel von Angriffen, da die Kenntnis der im Spielautomaten hinterlegten Zufallszahl bei Einsatz geeigneter Technik und Algorithmen eine statistische Vorhersage des Spielverlaufes ermöglicht und daher zu großen Verlusten des Spielautomatenaufstellers führen kann.

In der Veröffentlichung John Kelsey et al.: "Secure Applications of Low-Entropy Keys", vom 31.12.1998 (gefunden unter www.schneier.com/paper-low-entropy.pdf) wird ein Verfahren des "key-strechings" beschrieben, um brüte-force-Angriffe auch bei kurzen Schlüsseln (keys) besser abwehren zu können.

Die Aufgabe der vorliegenden Erfindung besteht daher darin, dass ein Verfahren zur Verwendung einer Zeichenkette in Systemen der Kryptographie, der Statistik, der Simulation, der Randomisierung von Spielautomaten und dgl. zur Verfügung zu stellen, das Angriffsmöglichkeiten auf die Zeichenkette verringert, insbesondere ganz unterbindet. Weiterhin soll auch eine Vorrichtung und ein entsprechendes Computerprogrammprodukt zur Verfügung gestellt werden.

Diese Aufgabe wird gelöst mit einem Verfahren nach Anspruch 1, einer Einrichtung nach Anspruch 12 und einem Computerprogrammprodukt nach Anspruch 13. Vorteilhafte Weiterbildungen sind in den abhängigen Unteransprüchen angegeben.

Der vorliegenden Erfindung liegt die Erkenntnis zugrunde, dass eine Zeichenkette immer dann nie optimal gegenüber Angriffen schützbar ist, wenn sie direkt in dem System verwendet wird. Daher besteht die erfindungsgemäße Lösung der Aufgabe darin, dass eine erste Zeichenkette bereitgestellt wird, die allerdings nicht direkt in dem System verwendet wird, sondern dass eine zweite Zeichenkette aus der ersten Zeichenkette generiert wird. Erst diese zweite Zeichenkette bzw. aus der zweiten Zeichenkette generierte weitere Zeichenketten werden dann in den Systemen verwendet und ein Angriff auf das System wird zwar gegebenenfalls die zweite Zeichenkette bzw. die daraus generierten weiteren Zeichenketten offenbaren, jedoch erhält die verwendete erste Zeichenkette einen sehr hohen Schutz. Die erste Zeichenkette wird also mehrfach zur Generierung mehrerer zweiter Zeichenketten verwendet. Beispielsweise wird nun nicht mehr die erste Zeichenkette als Schlüssel in Verschlüsselungsverfahren verwendet, sondern sie bleibt nur dazu hinterlegt, um daraus ständig neue Schlüssel zu erzeugen. Auf diese Weise muss nur einmal für einen langen Benutzungszeitraum ein solcher Schlüssel hinterlegt werden und die Wartungsabstände werden sehr groß.

Der gleiche Vorteil ergibt sich natürlich auch für andere Systeme, beispielsweise für Spielautomaten, wo nicht direkt Rückschlüsse auf die hinterlegte Zufallszahl gezogen werden können, so dass der Spielablauf über einen sehr lange Zeit unberechenbar bleibt.

Zweckmäßigerweise wird die erste Zeichenkette in einem maschinenlesbaren Speicher, insbesondere einem RAM, FLASH oder dgl. hinterlegt und bevorzugt wird die zweite Zeichenkette aus der ersten Zeichenkette automatisch in einem Prozessor, der in Kommunikation mit dem Speicher steht, generiert. Auf diese Weise funktioniert das Verfahren in dem System autark und ohne jegliche manuelle Unterstützung, so dass zusätzlich die Angreifbarkeit minimiert wird.

In einer bevorzugten Ausgestaltung sind die Zeichenketten Anordnungen zufälliger Zeichen, bevorzugt Zufallszahlen, insbesondere Anordnungen binärer Zufallszahlen, wodurch die Abwehr von Angriffen auf die Zeichenkette weiter verstärkt wird. Dabei ist die erste Zufallszahl bevorzugt eine physikalische Zufallszahl, da eine solche Zufallszahl unter statistischen Gesichtspunkten eine besonders hohe Qualität des Zufalls aufweist.

In einer besonders bevorzugten Ausgestaltung ist das System ein System der Kryptographie und die erste Zeichenkette ein Schlüssel zur Verschlüsselung.

In einer besonders vorteilhaften Ausgestaltung wird eine dritte Zeichenkette bereit gestellt, die bevorzugt unabhängig von der ersten Zeichenkette ist, wobei zur Generierung der zweiten Zeichenkette die erste Zeichenkette mit der dritten Zeichenkette logisch XOR codiert, bevorzugt logisch erweitert XOR codiert wird.

"Logisch XOR codiert" heißt in diesem Zusammenhang, dass die erste Zeichenkette mit der dritten Zeichenkette mittels einer exklusiv-oder-Verknüpfung der einzelnen Bits zu einem Ergebnis zusammengeführt werden, wobei die dritte Zeichenkette solange aneinandergereiht wird, bis diese Aneinanderreihung zumindest die Länge der ersten Zeichenkette aufweist.

"Logisch erweitert XOR codiert" heißt in diesem Zusammenhang, dass eine Teillänge der ersten Zeichenkette, die der Länge der dritten Zeichenkette entspricht, mit der dritten Zeichenkette bitmäßig exklusiv-oder-verknüpft wird und das erhaltene (Zwischen-)Ergebnis, das wiederum die Länge der dritten Zeichenkette aufweist, mit einem Teil des verbleibenden Teils der ersten Zeichenkette wiederum exklusiv-oder-verknüpft wird, wobei dieser Teil wiederum der Länge der dritten Zeichenkette entspricht. Das daraus erhaltene Ergebnis wird dann wiederum mit einem entsprechenden Teil des verbleibenden Teils der ersten Zeichenkette verknüpft und dieser Vorgang wird solange wiederholt, bis sämtliche Teile der ersten Zeichenkette dieser Verknüpfung unterzogen worden sind. Das Ergebnis der logisch erweiterten XOR-Codierung besteht in der Aneinanderreihung der erhaltenen Zwischenergebnisse.

Bevorzugt ist es, dass die dritte Zeichenkette größer 1 Bit bevorzugt ≥ 24 Bit und insbesondere ≥ 34 Bit lang ist. Dann ist die Sicherheit der ersten Zeichenkette zusätzlich erhöht.

Weiterhin ist es vorteilhaft, wenn die erste Zeichenkette größer 100 Byte, bevorzugt ≥ 1 MByte und insbesondere ≥ 100 MByte ist, da eine solche Größe der ersten Zeichenkette die Variationsmöglichkeiten stark erhöht und damit eine Wartung der ersten Zeichenkette nur in sehr seltenen Abständen erfolgen muss.

In einer weiteren vorteilhaften Ausgestaltung wird die zweite Zeichenkette zur Generierung einer vierten Zeichenkette in zwei Teillängen aufgeteilt, wobei eine Teillänge mit der anderen Teillänge logisch XOR codiert, bevorzugt logisch erweitert XOR codiert wird, und wobei dann die zweite Zeichenkette mit der vierten Zeichenkette logisch XOR, bevorzugt logisch erweitert XOR codiert wird. Dadurch wird die Angreifbarkeit der Zeichenkette zusätzlich herabgesetzt.

In einer bevorzugten Ausgestaltung enthält eine der beiden Teillängen nur Zeichen oder Bitfolgen, die in einer bevorzugt von der ersten Zeichenkette unabhängig bereitgestellten fünften Zeichenkette enthalten sind, und die andere der beiden Teillängen enthält nur Zeichen oder Bitfolgen, die nicht in der fünften Zeichenkette enthalten sind. In diesem Zusammenhang ist es besonders vorteilhaft, wenn die fünfte Zeichenkette ≥ 24 Byte lang ist und Zeichen von 8 Bit Länge enthält, wobei verglichen wird, ob die zweite Zeichenkette diese Zeichen jeweils enthält. Alternativ kann natürlich auch jede andere Länge zu Festlegung von Zeichen miteinander verglichen werden, wobei sich jedoch bei Längen von weniger als 8 Bit Redundanzen ergeben können, so dass keine zwei unterschiedlichen Teillängen mehr erstellt werden können.

Insbesondere soll in einer besonders vorteilhaften Ausgestaltung die dritte Zeichenkette mit der fünften Zeichenkette übereinstimmen und beide Zeichenketten werden auf einmal als dritte Zeichenkette bereitgestellt. Auf diese Weise werden zwei unterschiedliche Mischungsverfahren eingesetzt, wodurch die aus der ersten Zeichenkette hergestellte Zeichenkette, die dann in dem System Verwendung findet, besonders sicher gegenüber einem Angriff auf die erste Zeichenkette ist.

Selbstverständlich kann auch vorgesehen sein, dass die verschiedenen Mischungsschritte in einer beliebigen Abfolge und beliebeigen Wiederholung aufeinander folgend vorgenommen werden, wobei gegebenenfalls neue dritte und fünfte Zeichenketten bzw. neue gemeinsame dritte Zeichenketten bereitgestellt werden.

Selbständiger Schutz wird beansprucht für eine Einrichtung in Systemen der Kryptographie, der Statistik, der Simulation, der Randomisierung, von Spielautomaten und dgl., wobei die Einrichtung angepasst ist, das erfindungsgemäße Verfahren auszuführen.

Die Erfindung kann in Form einer völligen Hardware-Ausgestaltung, einer völligen Software-Ausgestaltung oder einer Ausgestaltung, die sowohl Hardware- als auch Software-Elemente enthält, verwirklicht werden. In einer bevorzugten Ausgestaltung ist die Erfindung in Software implementiert, die Firmware, systemeigene Software, Microcode und dgl. umfasst, jedoch nicht darauf beschränkt ist.

Weiterhin kann die Erfindung in Gestalt eines Computerprogrammprodukts verwirklicht werden, das von einem computernutzbaren oder computerlesbaren Medium zugänglich ist und einen Programmcode für die Benutzung durch oder für die Benutzung in Verbindung mit einem Computer oder jeden Befehlsausführungssystem bereitgestellt ist. Daher wird auch selbständiger Schutz beansprucht für ein Computerprogrammprodukt, das auf einem für einen Computer lesbaren Medium gespeichert ist und für den Computer lesbare Programmmittel umfasst, die den Computer veranlassen, das erfindungsgemäße Verfahren auszuführen, wenn die Programmmittel auf dem Computer ausgeführt werden.

Für die Zwecke dieser Beschreibung können computernutzbare oder computerlesbare Medien alle Einrichtungen oder Vorrichtungen sein, die das Programm für die Benutzung durch oder die Benutzung in Verbindung mit dem Befehlsausführungssystem, der Vorrichtung oder der Einrichtung enthalten, speichern, kommunizieren, verbreiten oder transportieren.

Das Medium kann ein elektronisches, magnetisches, optisches, elektromagnetisches, Infrarot- oder Halbleitersystem (oder Vorrichtung oder Einrichtung) sein oder ein

Ausbreitungsmedium. Beispiele eines computerlesbaren Mediums umfassen einen Halbleiter oder Feststoffspeicher, Magnetband, eine entfernbare Computerdiskette, einen Random Access Memmory (RAM), einen Read-only Memmory (ROM), eine feste magnetische Disk und eine optische Disk. Gegenwärtige Beispiele von optischen Disks umfassen Compaktdisk-Read-only Memmory (CD-ROM), Compaktdisk-Read/Write (CD-R/W) und DVD.

Ein Datenverarbeitungssystem, das geeignet ist, den Programmcode zu speichern und/oder auszuführen, umfasst wenigstens einen Prozessor, der direkt oder indirekt mit zumindest einem Speicherelement durch einen Systembus verbunden ist. Das Speicherelement kann lokalen Speicher umfassen, der während der aktuellen Ausführung des Programmcodes tätig wird, Massenspeicher und Pufferspeicher, der eine temporäre Speicherung von wenigstens einigen Programmcodes bereitstellt, um die Anzahl an Abrufen des Codes vom Massenspeicher während der Ausführung zu reduzieren.

Eingabe/Ausgabe- oder I/O-Einrichtungen, die Tastaturen, Displays, Zeigeeinrichtungen etc. umfassen können, jedoch nicht darauf limitiert sind, können mit dem System entweder direkt oder durch zwischengeschaltete I/O-Controller an das System angekoppelt sein.

Netzwerkadapter können ebenfalls mit dem System verbunden sein, um zu ermöglichen, dass das Daten verarbeitende System mit anderen Datenverarbeitungssystemen oder entfernten Druckern oder Speichereinrichtungen durch zwischengeschaltete private oder öffentliche Netzwerke angekoppelt wird. Modems, Kabelmodems oder E-thernet-Karten sind in diesem Zusammenhang nur einige Beispiele der gegenwärtig verfügbaren Typen von Netzwerkadaptern. Die Merkmale und weitere Vorteile der vorliegenden Erfindung werden nun anhand der Beschreibung eines bevorzugten Ausführungsbeispiels im Zusammenhang mit der Zeichnung deutlich werden. Dabei zeigen
- Fig. 1: einen Teil eines Kryptographiesystems,
- Fig. 2: eine Blockbilddarstellung des erfindungsgemäßen Verfahrens und
- Fig. 3: eine Blockbilddarstellung eines Schritts des Verfahrens nach Fig. 2.

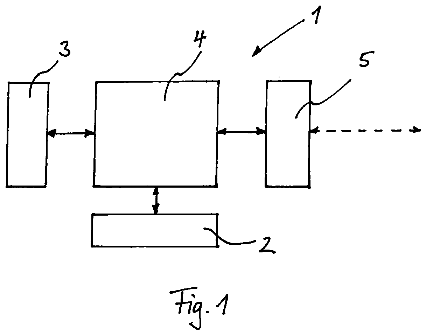

In Fig. 1 ist rein schematisch ein Teil 1 eines Kryptographiesystems dargestellt, dass einen ersten Speicher 2, einen zweiten Speicher 3, einen Prozessor 4 als Datenverarbeitungssystem und einen Netzwerkadapter 5 umfasst. Die Speicher 2, 3 können Halbleiter- oder Feststoffspeicher sein, aber auch Magnetbänder, Computerdisketten, RAM, ROM, magnetische oder optische Disk. Der Netzwerkadapter 5 steht in Kommunikation mit lokalen oder entfernt angeordneten weiteren Bestandteilen (nicht gezeigt) des Kryptographiesystems.

In dem ersten Speicher 2 ist eine erste Zeichenkette hinterlegt und in dem zweiten Speicher 3 das Computerprogrammprodukt, das den Teil 1 veranlasst, das erfindungsgemäße Verfahren auszuführen. Selbstverständlich können die Speicher 2, 3 auch als einheitliches Speicherelement ausgebildet sein und zusätzlich kann vorgesehen sein, dass weitere Speicherelemente, insbesondere Pufferspeicher, verwendet werden.

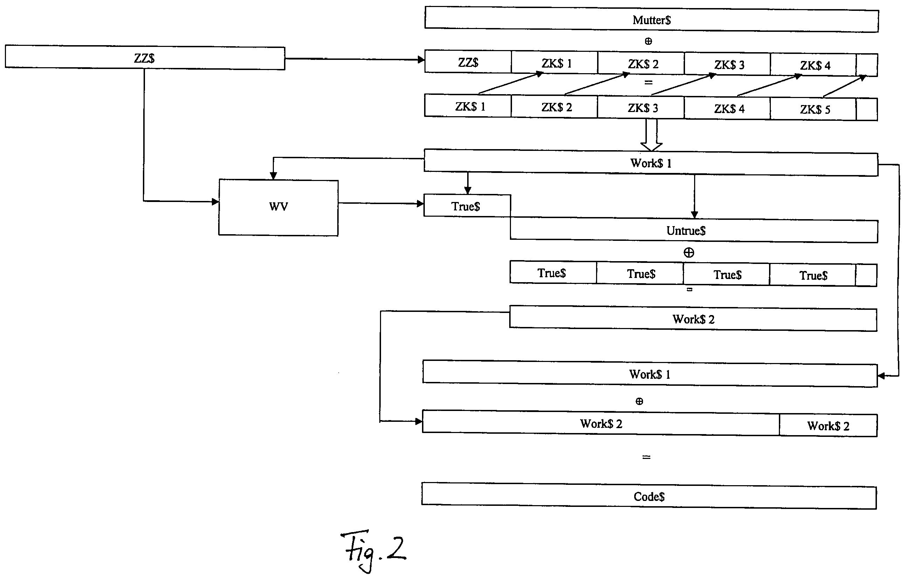

In Fig. 2 ist nun rein schematisch der erfindungsgemäße Verfahrensablauf anhand eines Blockschaltbildes dargestellt. Es ist zu erkennen, dass die erste Zeichenkette Mutter$ mit einer dritten Zeichenkette ZZ$ logisch erweitert XOR codiert wird. Im dargestellten Beispiel ist die erste Zeichenkette Mutter$ ein 100 MB großer Zufallszahlenstring und die dritte Zeichenkette ZZ$ ist ein 34 Byte großer Zufallszahlenstring. Die erste Zeichenkette Mutter$ wird nun mit der dritten Zeichenkette ZZ$ logisch erweitert XOR codiert. Dies erfolgt dadurch, dass die ersten 34 Byte der ersten Zeichenkette Mutter$ mit der dritten Zeichenkette ZZ$ logisch XOR codiert werden, wodurch als Ergebnis ein erster Teilstring ZK$ 1 entsteht, der ebenfalls eine Länge von 34 Byte aufweist. Dieser erste Teilstring ZK$ 1 wird dann wiederum verwendet, um einen weiteren Teil der ersten Zeichenkette Mutter$ XOR zu codieren. Dazu werden die nächsten 34 Byte der ersten Zeichenkette Mutter$ verwendet und es entsteht im Ergebnis ein zweiter Teilstring ZK$ 2, der seinerseits für die XOR Codierung der nächsten 34 Byte der ersten Zeichenkette Mutter$ verwendet wird. Dieses Prozedere wird, wie in Fig. 2 angedeutet, solange wiederholt, bis die gesamten 100 MB der ersten Zeichenkette Mutter$ verwertet wurden. Die Aneinanderreihung der Teilstrings ZK$ 1, ZK$ 2, ZK$ 3, ZK$ 4, ZK$ 5 und so fort, ergibt im Ergebnis eine zweite Zeichenkette

Work$ 1, die wie die erste Zeichenkette Mutter$ eine Länge von 100 MB aufweist.

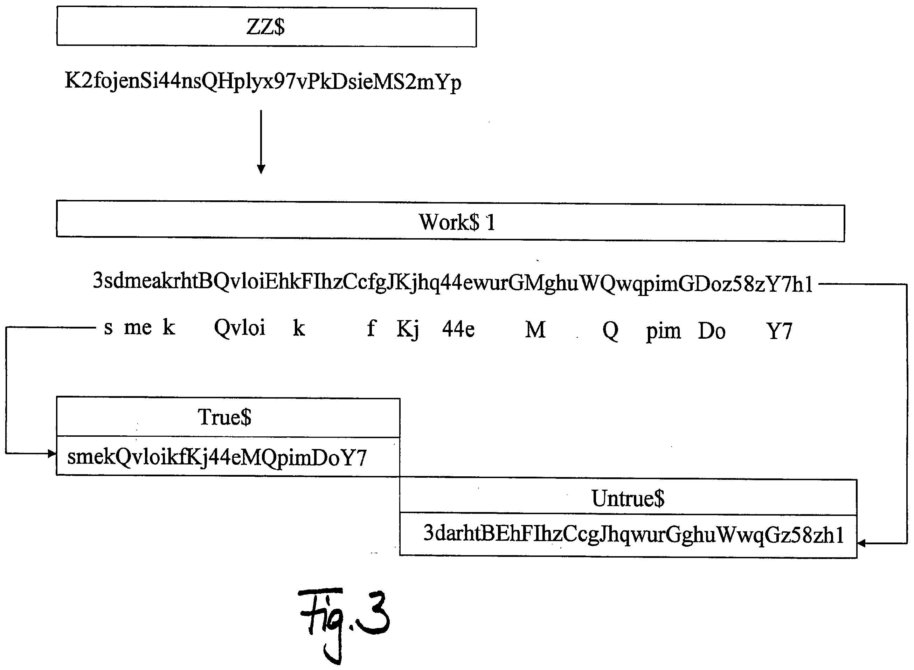

Diese zweite Zeichenkette Work$ 1 wird nun nach der in Fig. 3 näher beschriebenen Wichtungsvorschrift WV in zwei Teillängen True$, Untrue$ aufgespaltet und nachfolgend werden beide Teillängen True$, Untrue$ miteinander XOR codiert. Dies erfolgt dadurch, dass die kürzere Teillänge, im vorliegenden Beispiel True$, so oft aneinandergereiht wird, dass ihre Länge zumindest der längeren Teillänge, im vorliegenden Beispiel Untrue$, entspricht. Im Ergebnis entsteht dann eine vierte Zeichenkette Work$ 2, die die Länge der längeren Teillänge Untrue$ aufweist.

Selbstverständlich könnte anstatt einer XOR Codierung der beiden Teillängen auch alternativ eine erweiterte XOR Codierung erfolgen, um die Angreifbarkeit der ersten Zeichenkette Mutter$ weiter zu senken.

Anschließend wird die zweite Zeichenkette Work$ 1 mit der vierten Zeichenkette Work$2 XOR codiert, wobei wiederum die vierte Zeichenkette Work$ 2 sooft aneinandergereiht wird, dass ihre Länge der der zweiten Zeichenkette Work$ 1 entspricht. Im Ergebnis entsteht eine fünfte Zeichenkette Code$, die wiederum die Länge der ersten Zeichenkette Mutter$, also 100 MB aufweist.

In Fig. 3 ist rein schematisch die Wichtungsvorschrift WV aus Fig. 2 in einem Bloschaltbild dargestellt. Und zwar wird im Rahmen dieser Wichtungsvorschrift WV verglichen, welche in der dritten Zeichenkette ZZ$ enthaltenen Zeichen auch in der zweiten Zeichenkette Work$ 1 enthalten sind. Diejenigen Zeichen, die in der zweiten Zeichenkette Work$ 1 enthalten sind, werden in der Reihenfolge, die in der dritten Zeichenkette ZZ$ vorgegeben ist, in der ersten Teillänge True$ abgelegt. Andererseits werden diejenigen Zeichen der zweiten Zeichenkette Work$ 1, die nicht in der dritten Zeichenkette enthalten sind, in derjenigen Reihenfolge, die in der zweiten Zeichenkette Work$ 1 vorgegeben ist, in der zweiten Teillänge Untrue$ abgelegt. Dieser Mischalgorithmus verhindert zusätzlich die Rückwärtsrechnung, die sonst bei einfachen XOR Codierungen möglich sein kann. Natürlich kann auch eine andere Reihenfolge beim Erstellen der Teillängen True$, Untrue$ gewählt werden.

In dem vorstehend beschriebenen bevorzugten Ausführungsbeispiel des erfindungsgemäßen Verfahrens wird somit eine erste Zeichenkette Mutter$ verwendet, die bevorzugt als physikalische Zufallszahl binär erzeugt wurde. Diese erste Zeichenkette Mutter$ wird in dem System hinterlegt und weist eine statistisch sehr gute Qualität auf. Mit Hilfe der dritten Zeichenkette ZZ$, die aus einer 34 Byte langen Zufallszahl besteht und jeweils neu von dem Systemteil 1 unabhängig von der ersten Zeichenkette Mutter$ erzeugt wird, wird aus der ersten Zeichenkette Mutter$ eine fünfte Zeichenkette Code$ generiert, die dann im System weiter verwendet wird.

Bezüglich der Generierung der ersten Zeichenkette Mutter$ vor deren Bereitstellung im System bzw. dem Teil 1 des Systems wird auf die deutsche Patentanmeldung DE 10 2008 033 162 verwiesen und ihr Inhalt hiermit auch alternativ vollständig mit einbezogen. Diese Patentanmeldung beschreibt ausführlich, wie Zufallszahlen mit extrem hoher statistischer Qualität als physikalische Zufallszahlen erzeugt werden können. Dieses Erzeugungsverfahren kann dabei nicht nur zur Erzeugung der ersten Zeichenkette Mutter$ verwendet werden, sondern auch zur Erzeugung der dritten Zeichenkette ZZ$. Allerdings ist, wie gesagt, bevorzugt, dass diese Zeichenkette ZZ$ kostengünstig als Pseudozufallszahl im Prozessor 4 des Systemteils 1 selbst erzeugt wird.

Vor jeder Benutzung des Systems durch das Teil 1, bzw. Interaktion des Teils 1 mit dem System wird also aus der feststehenden ersten Zeichenkette Mutter$ eine fünfte

Zeichenkette Code$ generiert, die dann im System weiter verwendet wird. Dabei wird durch die Generationsschritte sicher gestellt, dass aus der fünften Zeichenkette Code$ keine Rückschlüsse auf die erste Zeichenkette Mutter$ gezogen werden können. Die erste Zeichenkette Mutter$ ist aus diesem Grunde also nicht angreifbar und kann auf Grund ihrer hohen Qualität über längere Zeit im System verwendet werden, so dass die Wartungskosten sehr gering sind. Außerdem sind das System bzw. die Teile 1 des Systems sehr einfach aufgebaut, da auf Grund der Generierung der fünften Zeichenkette Code$ aus der ersten Zeichenkette Mutter$ an die dritte Zeichenkette ZZ$ nur noch geringe Anforderungen zu stellen sind, so dass für die dritte Zeichenkette ZZ$ beispielsweise ein in einem Prozessor 4 implementierter Pseudozufallszahlengenerator Verwendung finden kann.

In dem oben beschriebenen bevorzugten Ausführungsbeispiel, in dem die erste Zeichenkette Mutter$ eine Länge von 100 MB und die dritte Zeichenkette ZZ$ eine Länge von 34 Byte aufweist, beträgt der Wertevorrat zur Erzeugung unterschiedlicher fünfter Zeichenketten Code$ 2²⁷² Möglichkeiten. Diese Menge ist größer als die berechnete Menge von Teilchen im Universum, die 2²⁶⁶ beträgt. Auf Grund dieses hohen Wertevorrates wird selbst dann, wenn eine Rückrechenbarkeit gegeben wäre, sicher verhindert, dass Rückschlüsse auf die erste Zeichenkette gezogen werden können, da nach allem menschlichen Ermessen der Aufwand so hoch wäre, dass gegenwärtige und zukünftige Rechenkapazitäten nicht ausreichen, diese Rückschlüsse in akzeptabler Zeit zu ziehen.

Über die erste Zeichenkette Mutter$ wird dabei die Menge 2⁸³⁸⁸⁶⁰⁸⁰⁰ Zufall bereitgestellt, die allerdings selbst nicht im System verwendet, insbesondere übertragen werden muss. Diese Zeichenkette dient vielmehr als Quelle für weitere zufällige fünfte Zeichenketten Code$, wobei durch die verwendete dritte Zeichenkette ZZ$ aufgrund der Mischungsvorschrift 2²⁷² verschiedene Möglichkeiten für die im System zu verwendende fünfte Zeichenkette Code$ bestehen. Durch Vergrößerung der ersten Zeichenkette Mutter$ und der dritten Zeichenkette ZZ$ kann diese Anzahl noch weiter vergrößert werden. Es besteht also für einen Außenstehenden keine aussichtsreiche Möglichkeit, über ein Abfangen der fünften Zeichenkette Code$ und Ausspionieren der dritten Zeichenkette ZZ$ - die beispielsweise in Kryptographiesystemene zwischen den Teilnehmern verschlüsselt oder unverschlüsselt übertragen werden kann - auf die erste Zeichenkette Mutter$ zu schließen.

Wichtig ist in diesem Zusammenhang, dass der Generierungsvorgang von der ersten Zeichenkette Mutter$ zur fünften Zeichenkette Code$ nur in einer Richtung nachvollzogen werden kann, so dass bei einer Kompromittierung der fünften Zeichenkette Code$, die im System verwendet wird, keinerlei Rückschlüsse auf die erste Zeichenkette Mutter$ gezogen werden können, die selbst im System nicht verwendet wird. Auf diese Weise lassen sich Systeme der Kryptographie, Statistik, Simulation, Randomisierung, Spielautomaten und dgl. wesentlich einfacher und kostengünstiger gestalten, die dennoch ein hohes Sicherheitsniveau aufweisen und sehr wartungsfreundlich sind.

Die dritte Zeichenkette ZZ$ ist je nach Anwendung ein momentanes Zufallsereignis. Die dabei erzeugte Menge von Ω_{ZZ$} = 2²⁷² dritter Zeichneketten ZZ$ ernthält etwa 10 - 15% ungeeignete Zufallszahlenstrings, wie etwa nur Nullen, 0000000....0 oder nur Einsen, 111111111111.........1 oder aber auch gemischte Formen. Jedenfalls sind derartige Strings vom Zufall nicht ausgeschlossen. Eine einfache logische XOR-Codierung mit dem Mutter$ hätte negative Folgen bezügliche der Sicherheit. Die Form der erweiterten logischen XOR-Codierung von dritter Zeichenkette ZZ$ mit erster Zeichenkette Mutter$ mindert diese negativen Folgen erheblich.

Der mit dem Mischalgorithmus erzeugte Stichprobenraum bewegt sich bei einem 100 MB großen Mutter$ bei Ω_{Mutter$} = 2^{838 860 800}, in dem sich die 2²⁷² verschiedenen fünften Zeichenketten Code$ wiederfinden, wie in der Tabelle beispielhaft dargestellt ist. Jeder nur erdenkliche Bitstrom von 100 MB befindet sich innerhalb des Stichprobenraumes. So auch die einzelnen erzeugten fünften Zeichenketten Code$, wobei sich für eine bestimmte dritte Zeichenkette ZZ$ natürlich nicht jede beliebige fünfte Zeichenkette Code$ innerhalb des Stichprobenraumes erzeugen lässt.

Da jede fünfte Zeichenkette Code$ auf eine mathematische Funktion von dritter ZZ$ und erster Zeichenkette Mutter$ zurückgeführt werden kann, bestehen mathematisch darstellbare Beziehungen aller möglichen fünfter Zeichenketten Code$ zueinander, z.B. ihre Lage im Stichprobenraum. Bei einer logischen XOR-Codierung von dritter ZZ$ und erster Zeichenkette Mutter$ ist dieser mathematische Zusammenhang leichter darstellbar. So sind z.B. die Abstände aller fünften Zeichenketten Code$ gleich groß. Über die genaue Lage im Stichprobenraum sind jedoch keine Aussagen möglich. Die Manipulation des Work$ 1 in True$ und Untrue$ verschleiert dies potenziell. Sind zwei oder auch mehrere fünfte Zeichenketten Code$ bekannt, ist es nicht möglich zweifelsfrei auf deren Quelle, sprich dritte ZZ$ und ersten Zeichnkette Mutter$, zu schließen. Weiterhin ist es damit unmöglich, beliebigen angenommenen fünften Zeichnketten Code$ unterschiedliche Wahrscheinlichkeiten zuzuweisen. Gleichzeitig wird gewährleistet, dass dieser Mischvorgang nur in einer Richtung ablaufen kann.

Das vorstehend beschriebene bevorzugte Mischverfahren zeichnet sich durch einen besonders sicheren Schutz der ersten Zeichenkette Mutter$ aus. Jedoch ist es nicht zwingend erforderlich, alle diese bevorzugten Verfahrensschritte zu verwenden. Auch das erfindungsgemäße Verfahren in seiner einfachsten Darstellung, wie sie Anspruch 1 zeigt, führt zu weit reichenden Verbesserungen gegenüber bisherigen Verfahren. Alle beschriebenen Verfahrensschritte sind außerdem in beliebiger Reihenfolge auch unter Auslassung einzelner Verfahrensschritte mit einander kombinierbar.

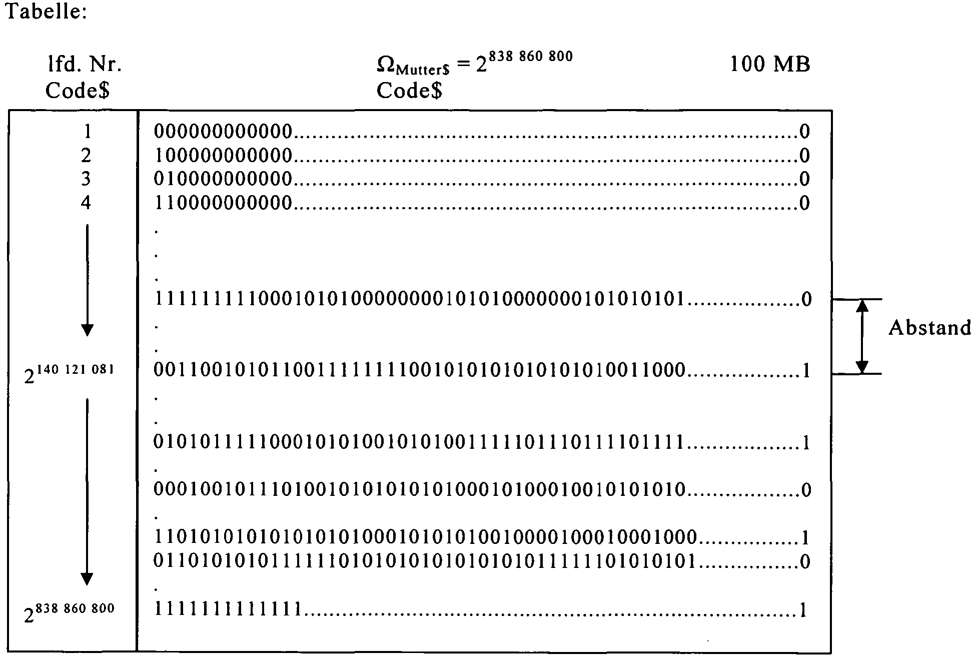

## Patentansprüche

1. Verfahren zur Erzeugung einer Zeichenkette für Systeme der Kryptographie, der Statistik, der Simulation, der Randomisierung, von Spielautomaten und dgl., **dadurch gekennzeichnet, dass** eine erste Zeichenkette (Mutter$) bereitgestellt wird, wobei die erste Zeichenkette (Mutter$) nicht direkt in dem System verwendet wird, sondern eine zweite Zeichenkette (Work$ 1) aus der ersten Zeichenkette (Mutter$) generiert wird, wobei die zweite Zeichenkette (Work$ 1) zur Generierung einer dritten Zeichenkette (Work$ 2) in zwei Teillängen (True$, Untrue$) aufgeteilt wird, wobei eine Teillänge mit der anderen Teillänge logisch XOR codiert, bevorzugt logisch erweitert XOR codiert wird, wobei die zweite Zeichenkette (Work$ 1) mit der dritten Zeichenkette (Work$ 2) logisch XOR codiert, bevorzugt logisch erweitert XOR codiert und das Ergebnis in dem System verwendet wird, wobei eine der beiden Teillängen (True$) nur Zeichen oder Bit-Folgen enthält, die in einer bereitgestellten vierten Zeichenkette (ZZ$) enthalten sind, und die andere der beiden Teillängen (Untrue$) nur Zeichen oder Bit-Folgen enthält, die nicht in der vierten Zeichenkette (ZZ$) enthalten sind, so dass ein Angriff auf das System zwar gegebenenfalls die zweite Zeichenkette (Work$ 1) bzw. daraus generierte weitere Zeichenketten (Work$ 2, Code$) offenbaren wird, jedoch die erste Zeichenkette (Mutter$) einen sehr hohen Schutz erhält.

2. Verfahren nach Anspruch 1, **dadurch gekennzeichnet, dass** die erste Zeichenkette (Mutter$) in einem maschinenlesbaren Speicher (2), insbesondere einem RAM, FLASH oder dgl., hinterlegt ist.

3. Verfahren nach Anspruch 2, **dadurch gekennzeichnet, dass** die zweite Zeichenkette (Work$ 1) aus der ersten Zeichenkette (Mutter$) automatisch in einem Prozessor (4), der in Kommunikation mit dem Speicher (2) steht, generiert wird.

4. Verfahren nach einem der vorherigen Ansprüche, **dadurch gekennzeichnet, dass** als Zeichenketten (Mutter$, Work$ 1, Work$ 2, Code$) Anordnungen zufälliger Zeichen, bevorzugt Zufallszahlen, insbesondere Anordnungen binärer Zufallszahlen verwendet werden.

5. Verfahren nach Anspruch 4, **dadurch gekennzeichnet, dass** als erste Zufallszahl (Mutter$) eine physikalische Zufallszahl verwendet wird.

6. Verfahren nach einem der vorherigen Ansprüche, **dadurch gekennzeichnet, dass** die erste Zeichenkette (Mutter$) als ein Schlüssel zur Verschlüsselung verwendet wird.

7. Verfahren nach einem der vorherigen Ansprüche, **dadurch gekennzeichnet, dass** eine fünfte Zeichenkette (ZZ$), bevorzugt unabhängig von der ersten Zeichenkette (Mutter$) bereitgestellt wird, wobei zur Generierung der zweiten Zeichenkette (Work$ 1) die erste Zeichenkette (Mutter$) mit der fünften Zeichenkette (ZZ$) logisch XOR codiert, bevorzugt logisch erweitert XOR codiert wird.

8. Verfahren nach Anspruch 7, **dadurch gekennzeichnet, dass** die fünfte Zeichenkette (ZZ$) größer als 1 Bit, bevorzugt ≥ 24 Byte und insbesondere ≥ 34 Byte lang gewählt wird.

9. Verfahren nach einem der vorherigen Ansprüche, **dadurch gekennzeichnet, dass** die erste Zeichenkette (Mutter$) größer als 100 Byte, bevorzugt ≥ 1 MByte und insbesondere ≥ 100 MByte gewählt wird.

10. Verfahren nach einem der Ansprüche Anspruch 1 bis 9, **dadurch gekennzeichnet, dass** die vierte Zeichenkette (ZZ$) ≥ 24 Byte lang ist und Zeichen von 8 Bit Länge enthält, wobei verglichen wird, ob die zweite Zeichenkette diese Zeichen enthält.

11. Verfahren nach Anspruch 9 oder 10 in Verbindung mit einem der Ansprüche 7 und 8, **dadurch gekennzeichnet, dass** die fünfte Zeichenkette und die vierte Zeichenkette identische Zeichenketten (ZZ$) sind und als fünfte Zeichenkette (ZZ$) bereitgestellt werden.

12. Einrichtung (1) in Systemen der Kryptographie, der Statistik, der Simulation, der Randomisierung, von Spielautomaten und dgl., **dadurch gekennzeichnet, dass** die Einrichtung (1) angepasst ist, ein Verfahren nach einem der vorherigen Ansprüche auszuführen.

13. Computerprogrammprodukt, das auf einem für einen Computer lesbaren Medium (2) gespeichert ist, umfassend für den Computer lesbare Programmmittel, die den Computer veranlassen, ein Verfahren nach einem der Ansprüche 1 bis 11 auszuführen, wenn die Programmmittel auf dem Computer ausgeführt werden.

## Claims

1. Method for generating a character string for systems for cryptography, statistics, simulation, randomisation, fruit machines and the like, **characterised in that** a first character string (mother$) is provided, wherein the first character string (mother$) is not used directly in the system but instead a second character string (work$1) is generated from the first character string (mother$), wherein the second character string (work$1) is divided into two partial lengths (true$, untrue$) in order to generate a third character string (work$2), wherein one partial length undergoes logical XOR coding with the other partial length, preferably undergoes logical expanded XOR coding, wherein the second character string (work$1) undergoes logical XOR coding with the third character string (work$2), preferably undergoes logical expanded XOR coding, and the result is used in the system, wherein one of the two partial lengths (true$) contains only characters or bit sequences that are contained in a fourth character string (ZZ$) that is provided, and the other of the two partial lengths (untrue$) contains only characters or bit sequences that are not contained in the fourth character string (ZZ$), such that, although an attack on the system may disclose the second character string (work$1) or further character strings (work$2, code$) generated therefrom, the first character string (mother$) is provided with a very high level of protection.

2. Method according to claim 1, **characterised in that** the first character string (mother$) is stored in a machine-readable memory (2), in particular a RAM, FLASH or the like.

3. Method according to claim 2, **characterised in that** the second character string (work$1) is automatically generated from the first character string (mother$) in a processor (4) that is in communication with the memory (2).

4. Method according to any of the preceding claims, **characterised in that** arrangements of random characters, preferably random numbers, in particular arrangements of binary random numbers, are used as the character strings (mother$, work$1, work$2, code$).

5. Method according to claim 4, **characterised in that** a physical random number is used as the first random number (mother$).

6. Method according to any of the preceding claims, **characterised in that** the first character string (mother$) is used as a key for encryption.

7. Method according to any of the preceding claims, **characterised in that** a fifth character string (ZZ$) is provided preferably independently of the first character string (mother$), wherein in order to generate the second character string (work$1), the first character string (mother$) undergoes logical XOR coding, preferably logically expanded XOR coding, with the fifth character string (ZZ$).

8. Method according to claim 7, **characterised in that** the fifth character string (ZZ$) is selected so as to be longer than 1 bit, preferably ≥ 24 bytes, and in particular ≥ 34 bytes.

9. Method according to any of the preceding claims, **characterised in that** the first character string (mother$) is selected so as to be greater than 100 bytes, preferably ≥ 1 MB, and in particular ≥ 100 MB.

10. Method according to any of claims 1 to 9, **characterised in that** the fourth character string (ZZ$) is ≥ 24 bytes long and contains characters of 8 bits long, wherein a comparison is performed as to whether the second character string contains these characters.

11. Method according to either claim 9 or claim 10 in conjunction with either claim 7 or claim 8, **characterised in that** the fifth character string and the fourth character string are identical character strings (ZZ$) and are provided as the fifth character string (ZZ$).

12. Device (1) in systems for cryptography, statistics, simulation, randomisation, fruit machines and the like, **characterised in that** the device (1) is adapted so as to carry out a method according to any of the preceding claims.

13. Computer program product that is stored on a computer-readable medium (2), this product comprising computer-readable program means that cause the computer to execute a method according to any of claims 1 to 11 when the program means are executed on the computer.

## Revendications

1. Procédé servant à générer une chaîne de caractères pour des systèmes de cryptographie, de statistique, de simulation, de randomisation, de machines à sous et similaires, **caractérisé en ce qu'**une première chaîne de caractères (Mère$) est fournie, dans lequel la première chaîne de caractères (Mère$) n'est pas utilisée directement dans le système, mais une deuxième chaîne de caractères (Work$ 1) est générée à partir de la première chaîne de caractères (Mère$), dans lequel la deuxième chaîne de caractères (Work$ 1) est divisée, pour générer une troisième chaîne de caractères (Work$ 2), en deux longueurs partielles (True$, Untrue$), dans lequel une longueur partielle est codée avec une fonction logique XOR, de manière préférée est codée avec une fonction logique étendue XOR, avec l'autre longueur partielle, dans lequel la deuxième chaîne de caractères (Work$ 1) est codée avec une fonction logique XOR, de manière préférée est codée avec une fonction logique étendue XOR, avec la troisième chaîne de caractères (Work$ 2) et le résultat est utilisé dans le système, dans lequel une des deux longueurs partielles (True $) contient des caractères ou des suites d'octets seulement, qui sont contenus dans une quatrième chaîne de caractères (ZZ$) fournie, et l'autre des deux longueurs partielles (Untrue$) contient des caractères ou des suites d'octets seulement, qui ne sont pas contenus dans la quatrième chaîne de caractères (ZZ$) de sorte qu'une attaque du système, à savoir éventuellement la deuxième chaîne de caractères (Work$ 1) ou d'autres chaînes de caractères (Work$ 2, Code$) générées sur cette base sont divulguées, toutefois la première chaîne de caractères (Mère$) obtient une protection très élevée.

2. Procédé selon la revendication 1, **caractérisé en ce que** la première chaîne de caractères (Mère$) est enregistrée dans une mémoire (2) lisible par une machine, en particulier une mémoire RAM, FLASH ou similaire.

3. Procédé selon la revendication 2, **caractérisé en ce que** la deuxième chaîne de caractères (Work$ 1) est générée à partir de la première chaîne de caractères (Mère$) automatiquement dans un processeur (4), qui est en communication avec la mémoire (2).

4. Procédé selon l'une quelconque des revendications précédentes, **caractérisé en ce que** sont utilisés en tant que chaînes de caractères (Mère$, Work$ 1, Work$ 2, Code$) des ensembles de caractères aléatoires, de manière préférée des nombres aléatoires, en particulier des ensembles de nombres aléatoires binaires.

5. Procédé selon la revendication 4, **caractérisé en ce qu'**est utilisé en tant que premier nombre aléatoire (Mère$) un nombre aléatoire physique.

6. Procédé selon l'une quelconque des revendications précédentes, **caractérisé en ce que** la première chaîne de caractères (Mère$) est utilisée comme une clé servant au cryptage.

7. Procédé selon l'une quelconque des revendications précédentes, **caractérisé en ce qu'**une cinquième chaîne de caractères (ZZ$) est fournie de manière préférée indépendamment de la première chaîne de caractères (Mère$), dans lequel pour générer la deuxième chaîne de caractères (Work$ 1), la première chaîne de caractères (Mère$) est codée avec une fonction logique XOR, de manière préférée est codée avec une fonction logique étendue XOR, avec la cinquième chaîne de caractères (ZZ$).

8. Procédé selon la revendication 7, **caractérisé en ce que** la cinquième chaîne de caractères (ZZ$) est supérieure à 1 octet, de manière préférée est choisie avec une longueur ≥ 24 octets et en particulier une longueur ≥ 34 octets.

9. Procédé selon l'une quelconque des revendications précédentes, **caractérisé en ce que** la première chaîne de caractères (Mère$) est supérieure à 100 octets, de manière préférée est choisie ≥ 1 Mo et en particulier ≥ 100 Mo.

10. Procédé selon l'une quelconque des revendications 1 à 9, **caractérisé en ce que** la quatrième chaîne de caractères (ZZ$) a une longueur ≥ 24 octets et contient des caractères longs de 8 octets, dans lequel il est comparé si la deuxième chaîne de caractères contient lesdits caractères.

11. Procédé selon la revendication 9 ou 10 en lien avec l'une quelconque des revendications 7 et 8, **caractérisé en ce que** la cinquième chaîne de caractères et la quatrième chaîne de caractères sont des chaînes de caractères (ZZ$) identiques et sont fournies en tant que cinquième chaîne de caractères (ZZ$).

12. Dispositif (1) dans des systèmes de cryptographie, de statistique, de simulation, de randomisation, de machines à sous et similaires, **caractérisé en ce que** le dispositif (1) est adapté pour exécuter un procédé selon l'une quelconque des revendications précédentes.

13. Produit programme informatique, qui est mémorisé sur un support (2) lisible par un ordinateur, comprenant des moyens de programme lisibles par l'ordinateur, qui amènent l'ordinateur à exécuter un procédé selon l'une quelconque des revendications 1 à 11 quand les moyens de programme sont exécutés sur l'ordinateur.
